# EUROPEAN PATENT SPECIFICATION

(11) **EP 4 528 141 B1**
(45) Date of publication and mention of the grant of the patent: **29.10.2025**
(21) Application number: 23198907.0
(22) Date of filing: 21.09.2023
(51) Int. Cl.: F16L 23/08

(54) **PIPE CLAMP, PIPE CLAMP ASSEMBLY AND METHOD FOR FASTENING THE SAME**
ROHRSCHELLE, ROHRSCHELLENANORDNUNG UND VERFAHREN ZUR BEFESTIGUNG DAVON
COLLIER DE SERRAGE, ENSEMBLE COLLIER DE SERRAGE ET PROCÉDÉ DE FIXATION DE CELUI-CI

(43) Date of publication of application: 26.03.2025
(73) Proprietor: Akrapovic d.d., 1295 Ivancna Gorica (SI)
(72) Inventor: PENCA, Jure, 1235 Radomlje (SI); VEBER, Bostjan, 3313 Polzela (SI); PIRNAR, Joze, 8310 Sentjernej (SI)
(74) Representative: Schmid, Nils T.F.

(56) References cited:
- EP-A1- 1 962 008
- DE-U1- 202013 011 706

## Description

Embodiments described herein relate to pipe clamps, in particular an exhaust pipe clamps, e.g. for vehicles such as cars or motorcycles, a pipe clamp assembly and a method for providing positional stabilization during fasting of the same.

Pipe clamps, in particular exhaust pipe clamps, may be used in various different situation where pipes need to be connected and/or secured, for example in vehicle or automotive, marine, industrial and/or HVAC (heating ventilation and air condition) applications, among others.

For example, exhaust pipe clamps may be used in automotive exhaust systems to connect and secure the various components of the system, such as the muffler, catalytic converter, and tailpipe. In these applications, exhaust pipe clamps may need to withstand high temperatures and exposure to road salt, moisture, and other environmental factors. Also, they may need to be able to handle the vibrations and stresses associated with driving, as well as the thermal expansion and contraction of the exhaust system components.

Exhaust pipe clamps may also be used in industrial applications, such as in power plants. This can include securing the exhaust stack to an engine or turbine, as well as connecting pipes and other components within the exhaust system itself. In these applications, exhaust pipe clamps may need to be able to withstand high temperatures and vibrations, and they may also need to be resistant to corrosion and other types of wear and tear.

In marine applications, exhaust pipe clamps may be used to connect and secure the various components of the exhaust system, such as the manifold, muffler, and tailpipe. In these applications, they may need to be able to withstand exposure to saltwater and other harsh marine environments, as well as the vibrations and stresses associated with operating a boat or ship. In some cases, marine exhaust pipe clamps may also need to be designed to meet specific regulatory requirements related to emissions and pollution.

In HVAC applications, exhaust pipe clamps may be used to connect and secure ductwork and other components in the exhaust system. This can include connecting the exhaust duct to a ventilation fan, as well as connecting ductwork and other components within the system itself. In these applications, exhaust pipe clamps may need to be able to withstand the air pressure and other stresses associated with operating an HVAC system, and they may also need to be designed to meet specific regulatory requirements related to air quality and ventilation.

However, there are several limitations and potential problems occurring in pipe clamps.

One problem may be related to friction. Friction can be a significant issue, as it can affect the clamping force and stability of the connection. Over-tightening the ring-like structure of the pipe clamp can lead to increased friction and cause premature failure of the pipe clamp. Similarly, if the components of the pipe clamp, such as the bolt, nut, and washer etc. are not positioned correctly, they may not provide a secure and stable connection, which can lead to safety hazards and mechanical issues. Friction may also influence the torque force required to tighten or fasten the pipe clamp.

Another important problem may be related to the alignment of the pipe and the pipe clamp. Proper alignment is essential to ensure a proper fit and to prevent leaks. If the pipe is not aligned properly with the pipe clamp, it can cause stress on the connection and lead to failure of the pipe clamp. The temperature of the exhaust gases can also affect the clamping force and stability of the connection, making it important to choose a pipe clamp that is designed to withstand the specific temperature range of the exhaust system.

Proper installation, alignment, and tightening/fixation of not only the pipe and the pipe clamp with respect to each other, but also the components of the pipe clamps before and during tightening is also crucial to ensure not only safe but also an effective connection. Proper installation, alignment, and tightening/fixation should also be ensured during hot temperatures, e.g. above 600°C and cold temperatures, e.g. below -20°C, and in particular throughout the whole diameter of the pipe clamp.

Another problem may result from side/lateral forces acting on the pipe clamp. In some applications, the exhaust system may be subject to lateral, side and/or radial forces, such as, for example, those encountered during cornering or sudden lane changes. The pipe clamp should withstand such forces and maintain the alignment of the exhaust system components, preferably at all times.

Furthermore, equal and/or even distribution of forces acting on or around the pipe is advantageous because it may help to prevent damage to the pipe and the pipe clamp, thereby preventing leakage and/or ensuring tight seal. For example, some clamps have a rubber lining that helps absorb vibrations and distributes forces evenly around the pipe.

International Patent application WO 2014/071950 A1 describes an exhaust pipe band clamp having flanges with reinforced ribs, wherein fastening means in the form of a bolt and a nut are provided.

International Patent application WO 2006/055966 A2 describes a band clamp having a band and a nut and bolt fastener, wherein the head of the bolt has a convex structure interacting with the flange.

US Patent application US 2005/0029813 A1 describes a pipe clamp including a bolt and two hinge parts that may be formed as hinge bolts or hinge sleeves.

Document EP 1 962 008 A1 relates to an annular clamp comprising a split ring having two ends. There is a respective lug integrally formed on each of the ends of the split ring, with each lug extending outwardly from the split ring in a substantially radial direction. A respective lug aperture is formed through each of the lugs such that when the lugs are brought into a confronting relationship the lug apertures together define a path for receiving a linear bolt. The annular clamp further comprises a nut for receiving a linear bolt. The nut has a threaded aperture, and is moveably retained in one of the lug apertures such that a longitudinal axis of the threaded aperture is moveable within a plane defined by the split ring.

Document DE 20 2013 011 706 U1 relates to Screw connection, in particular for a tension clamp, with a screw which has a screw head and an external thread with a thread profile and a thread axis, and a counter-thread element which has an internal thread adapted to the external thread and with at least one thread notch delimited by thread flanks and into which the screw can be screwed. The external thread has a geometrically determined deformation at a predetermined distance from the screw head, which collides with at least one thread flank when the screw is screwed into the counter-thread element.

Accordingly, it is beneficial to provide an improved pipe clamp, in particular and exhaust pipe clamp to prevent, reduce and/or counteract friction-, force-distributing-, alignment and/or positional limitations.

The subject-matter provided by the present invention is defined in the independent claims, while preferred embodiments of the present invention are defined in the dependent claims.

One aspect of the invention relates to pipe clamp, comprising: an annular structure configured to receive at least one pipe; the annular structure including a first flange element arranged at one end of the annular structure and a second flange element arranged at another end of the annular structure; at least two individual alignment elements configured to be arranged on a fastener to respectively engage with the first flange element and the second flange element in a form-fitting manner, wherein one of the at least two individual alignment elements is has a flange-engaging shape that is substantially spherical.

Another aspect of the invention, which may be combined with any aspect and/or embodiment recited herein, relates to a pipe clamp, comprising: an annular structure configured to receive at least one pipe; the annular structure including a first flange element arranged at one end of the annular structure and a second flange element arranged at another end of the annular structure; wherein the first flange element and the second flange element include respective support structures extending towards each other and overlapping one another, in particular at least partially.

Another aspect of the invention, which may be combined with any aspect and/or embodiment recited herein, relates to a pipe clamp, comprising: an annular structure configured to receive at least one pipe; wherein the annular structure comprises at least one fixation structure configured to engage with a protruding edge of the at least one pipe.

The invention also relates to a pipe clamp assembly, comprising: a pipe clamp according to one or more of the aspects and/or embodiments recited herein and a fastener mounted to the first flange element and the second flange element.

The invention also relates to a method for providing positional stabilization of one or more components comprised in a pipe clamp according to one or more of the aspects and/or embodiments recited herein or a pipe clamp assembly according to one or more of the aspects and/or embodiments recited herein, during fastening of the same.

As mentioned above, according to one aspect of the invention relates to pipe clamp, comprising an annular structure configured to receive at least one pipe.

An "annular structure" may be understood as an element that may be annularly, circularly and/or ring shaped and that may encircle, encompass, enclose, surround and/or engage (e.g. engage around) with the pipe, e.g. on or at an outer surface of the pipe. The annular structure may have width, e.g. in the axial or extension direction of the pipe, of about 0,5-3,5 cm, particularly 1-2,5 cm, preferably about 2cm and a thickness of about 0,5-2 mm, particularly 1-2 mm, preferably about 1mm. However, other dimensions are possible which may depend on the size of the pipe to be received. The annular structure may be, for example, made from metal, e.g. including steel synthetic material, including a polymer. The annular structure may be formed as a hollow shaft or, for example, a band or band-like element, or a bent metal sheet/plate. The pipe may be an exhaust pipe, e.g. of a vehicle such as car or motorcycle or the like.

The annular structure may include a first flange element arranged at one end of the annular structure and a second flange element arranged at another end of the annular structure. The first flange element and the second flange element may be integrally formed with the annular structure or separately therefrom. The pipe clamp may further comprise at least two individual alignment elements configured to be arranged on a fastener to respectively engage with the first flange element and the second flange element in a form-fitting manner.

A flange may be a, e.g. projecting, plate, rim or collar and configured to provide a connection point, e.g. for joining two components together. The first flange element and the second flange element may include respective holes configured to receive a fastener, wherein a diameter of the holes is greater than a diameter of the fastener. This may result in having backlash, e.g. a clearance to allow the fastener to move more freely during fastening and, thus, lead to improved alignment/positioning and/or reduces friction, e.g. during fastening. The holes of the first flange element and the second flange element may be coaxially aligned with respective holes of at least two individual alignment elements. The fastener may be a bolt or screw, for example, or the like.

An "individual alignment element" may be understood as an element that may be used to engage with one or more components/elements and/or surfaces thereof to e.g. i) accurately, properly and/or precisely ensure alignment, positioning and/or orientation of these one or more components/elements and/or surfaces; and/or, e.g., to ii) prevent or reduce misalignment, unintended movements/angles, displacements and/or to reduce friction of these one or more components/elements and/or surfaces. The two individual alignment elements according to embodiments described herein may also allow a more even distribution of forces, e.g. around a pipe, e.g. during fastening. Reference to "individual" alignment elements may be understood to emphasize that the alignment elements are separately made from the other components, e.g. of the pipe clamp, i.e. that the same are not integrally made therewith.

One of the at least two individual alignment elements may have a flange-engaging shape that is substantially spherical. The one of the at least two individual alignment elements may be a washer, in particular a spherical washer.

"Substantially spherical" can be understood that the flange-engaging shape has a curvature that, e.g. closely, resembles the shape of a sphere, e.g. a segment of a sphere, e.g. a spherical segment or a half-sphere or hemisphere and/or in that the flange-engaging shape has a spherical cross section. For example, at least one of the individual alignment elements, or also both, may be a washer having a plan-convex shape, e.g. that spherically curves (e.g. the flange-engaging shape) in the direction of the flange element on one side, while being, e.g. substantially flat (or planar) on the other, e.g. opposing, side. Such a washer may be referred to as a spherical washer.

The other one of the two alignment elements may be another washer having a flange-engaging shape that is substantially spherical, e.g. another spherical washer. The other one of the two alignment elements may also be a nut, in particular a barrel-shaped nut or a barrel nut, wherein in particular the nut has a flange-engaging shape that is substantially cylindrical. For the barrel nut, the same may be threaded, wherein the threads may be perpendicular to the length of the nut. Other shapes of the nut may be also possible. In particular, the nut may be a metric thread type nut, with a cylindrical outer shape (barrel shaped), which may be held in place (while tightening), e.g. with a counter cylindrical shape flange from the clamp.

The alignment elements may be, for example, made from metal, e.g. including steel or synthetic material, including a polymer.

Having a flange-engaging shape that is substantially spherical allows, e.g., for a larger contact area between the alignment element and the flange element, ensuring a more even distribution of forces, reducing friction and/or localized stress concentrations. When friction points are reduced, much lower torque is required in order to maintain a circumferential tightening force, e.g. between the clamp, annular structure and/or the pipe. This further allows to use smaller bolts making the pipe clamp lighter. Also, the curvature of the spherical shape aids in aligning the alignment element with the flange, promoting accurate positioning, orientation and/or preventing misalignment, unintended movements/angles, displacements of components of the pipe clamp and/or the pipe clamp as a whole, e.g. during installation or operation. The spherical engagement further helps, e.g., to enhance the stability and rigidity of the connection and reduces the likelihood of movement, vibration, and/or loosening, e.g. during installation or operation.

The first flange element and the second flange element may each include an engaging portion to respectively receive the at least two individual alignment elements. Each engaging portion may have a shape corresponding to a respective flange-engaging shape of the at least two individual alignment elements. The engaging portions of the first flange element and the second flange element may be bent, in particular curved in a direction toward one another, e.g. concavely. For example, one engaging portion may concavely curve, e.g. bent inwardly, in the direction towards the other one engaging portion, e.g. to receive the convexly shaped alignment element. The same may also apply for the other engaging portion. At least one engaging portion may have a shape that is substantially spherical. Also, both of the engaging portions may have a shape that is substantially spherical. The other one of the engaging portions may have a shape that is substantially cylindrical, e.g. to receive the barrel nut. Other shapes are also possible.

The engaging portion having a shape "corresponding" to a flange-engaging shape may be understood in that the shape of the engaging portion and the flange-engaging shape are matched, tailored, adapted to one another and/or complement each other, e.g. with respect their form, curvature or shape. For example, the engaging portion that interfaces, contacts, is directed to and/or engages with the flange-engaging shape is formed, adapted, and/or contoured to match, fit and/or conform to the shape or curvature of the alignment element. For example, if the flange-engaging shape (e.g. substantially spherical) of the individual alignment element is convex or plan-convex, e.g. outwardly curved in the direction to the engaging portion of the flange element, then the respective shape of the engaging portion of the flange element may be also substantially spherical and/or concavely bent or curved, e.g. inwardly curved in the direction away from the flange-engaging shape, e.g. to engage or receive the flange-engaging shape. Other shapes, e.g. cylindrical and/or barrel shapes are also possible (s. below).

The first flange element and the second flange element may be arranged in between the at least two individual alignment elements. In particular the at least two individual alignment elements may respectively engage with the first flange element and the second flange element from opposing sides. This allows to prevent or reduce misalignment, unintended movements/angles, displacements and/or to reduce friction from both sides on the pipe clamp, and allows to maintain alignment, positioning and/or orientation, e.g. during fastening. In this way, also a force around the annular structure may be more evenly distributed. When friction points are reduced, much lower torque is required in order to maintain a circumferential tightening force, e.g. between the clamp, annular structure and/or the pipe. This further allows to use smaller bolts making the pipe clamp lighter.

According to another aspect of the invention, which may be combined with any aspect and/or embodiment recited herein, relates to a pipe clamp, comprising an annular structure configured to receive at least one pipe; the annular structure including a first flange element arranged at one end of the annular structure and a second flange element arranged at another end of the annular structure; wherein the first flange element and the second flange element may include respective support structures extending towards each other and overlapping one another, in particular at least partially.

A "support structure" may be understood as a framework, structure, construction and/or element that, e.g., provides stability, strength, fixation and/or support, e.g. for the pipe clamp. A support structure may be used to reduce and/or avoid unintentional movements, displacements and/or to counteract, e.g. lateral/radial, forces, e.g. acting on the pipe clamp.

The support structures may be integrally formed with the first flange element and the second flange element respectively and/or the annular structure, e.g. in one piece. For example, a first support structure may be formed by the first flange element and a second support structure may be formed by the second flange element.

Each support structure may include at least two lateral sections which may be connected to a base section. At least two lateral sections of one of the first flange element or the second flange element extend in a direction towards the other one of the first flange element or the second flange element. The at least two lateral sections of each support structure may be arranged, e.g. and also connected, substantially perpendicular with respect to the base section. For example, the lateral sections may project away from the base section and/or the lateral sections may form substantially a right angle or close to a right angle with respect to the base section. The at least two lateral sections of each respective support structure may extend parallel to each other, e.g. maintaining an equal distance or spacing apart along their length, e.g. to create an opening or receiving space therebetween. For example, when viewed from a top (s. below), each support structure may be in the shape of a "U", e.g. substantially U-shaped, with the base section forming the bottom line of the "U" and the lateral sections forming the vertical lines of the "U".

Additionally, the at least two lateral sections of one support structure may be tapering in the direction towards the other support structure. For example, the lateral sections may decrease in width and/or height, e.g. they may become smaller or narrower as they are approaching one another. For example, the lateral sections may be in the shape of a triangle or a wedge. This may allow to make components of the pipe clamp more easily accessible and/or allows to reduce material costs.

The lateral sections of each support structure may be spaced apart, e.g. thereby defining an opening or a receiving space, e.g. therebetween. An example spacing may be in the range of 0,5-4cm, more particularly 1-3cm or more/less, e.g. depending on the size of the pipe clamp and/or the pipe. A size of the opening or receiving space of one of the support structures may be greater than a size of the receiving space of the other support structure. For example, one support structure may have larger lateral sections that are further spaced apart as compared to the laterals sections of the other support structure, resulting in a larger opening. As such, it could be said that one support structure is larger than the other one, e.g. in terms of the opening formed thereby. The opening or receiving space of the support structure having the greater size may be configured to at least partially encompass, surround, receive, encapsulate and/or enclose the other support structure, in particular in a direction towards the other support structure. For example, the larger support structure, e.g. their lateral sections, may extend beyond the smaller support structure, e.g. their lateral sections, enclosing it within its bounds, e.g. its opening defined therebetween.

Also, when this aspect is combined with the preceding aspect of the invention, a respective base section, e.g. of a respective support structure, may correspond to a respective engaging portion of the respective flange element. In such an embodiment, these terms may be used interchangeably or the engaging portion may be located within the base section.

According to another aspect of the invention, which may be combined with any aspect and/or embodiment recited herein, relates to a pipe clamp, comprising an annular structure configured to receive at least one pipe; wherein the annular structure comprises at least one fixation structure configured to engage with a protruding edge of the at least one pipe.

The at least one fixation structure may be integrally formed with the annular structure, in particular at a circumferential portion of the annular structure. The at least one fixation structure may include a straight section extending in an axial direction of the at least one pipe and a bent section extending substantially perpendicular to the axial direction of the at least one pipe, wherein in particular the fixation structure is substantially hook-shaped.

A "fixation structure" may be a structure, component and/or element that provides/enhances stability and fixation to the pipe clamp, secures a position of the clamp on one or more pipes and/or prevents movement and/or separation of the pipes, and/or allows for effective clamping and secure fastening, e.g. on the at least one pipe. For example, when two pipes are connected end to end, an, e.g. at least partial, overlap may be created or occur, where one pipe encompasses, encloses and/or receives the other, which may result in a protruding edge, e.g. from an end of the outer pipe, e.g. that sticks out, projects, protrudes etc.

The fixation structure, e.g. due to its hook-shape, may engage with this protruding edge, e.g. to stabilize, maintain, strengthen, fix, secure and/or hold a position of the pipe clamp, e.g. on the at least one pipe. In this way, axial forces/movements, e.g. acting in an axial direction of the pipe on the pipe clamp, may be counteracted also.

The pipe clamp recited herein may is an exhaust pipe clamp, wherein in particular the first flange element and the second flange element may be integrally formed with the annular structure.

The pipe clamp disclosed herein may be a self-aligning pipe clamp, e.g. which aligns itself during fastening, e.g. using one or more of the features recited above to do so.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1A: shows a side view of a pipe clamp according to embodiments described herein;
- FIG. 1B: shows a sectional view of the pipe clamp of Fig. 1A along direction A-A;
- FIG. 1C: shows a schematic view of the pipe clamp of Figs. 1A-D when viewed in the axial direction of a pipe;
- FIG. 1D: shows a three-dimensional side view of the pipe clamp of Fig. 1C from one side;
- FIG. 1E: shows a three-dimensional side view of the pipe clamp of Fig. 1D from another side;
- FIG. 1F: shows a sectional view of the pipe clamp of Fig. 1A along direction E-E.
- FIG. 1G: shows a top view of the pipe clamp of Figs. 1A-1F;
- Fig. 1H: shows an example nut from multiple prespectives;
- FIG. 2A: shows a side view of a pipe clamp according to embodiments described herein;
- FIG. 2B: shows a sectional view of the pipe clamp of Fig. 2A along direction D-D;
- FIG. 2C: shows a schematic view of the pipe clamp of Figs. 2A-B when viewed in the direction of a pipe; and
- FIG. 2D: shows a three-dimensional side view of the pipe clamp of Fig. 2C.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

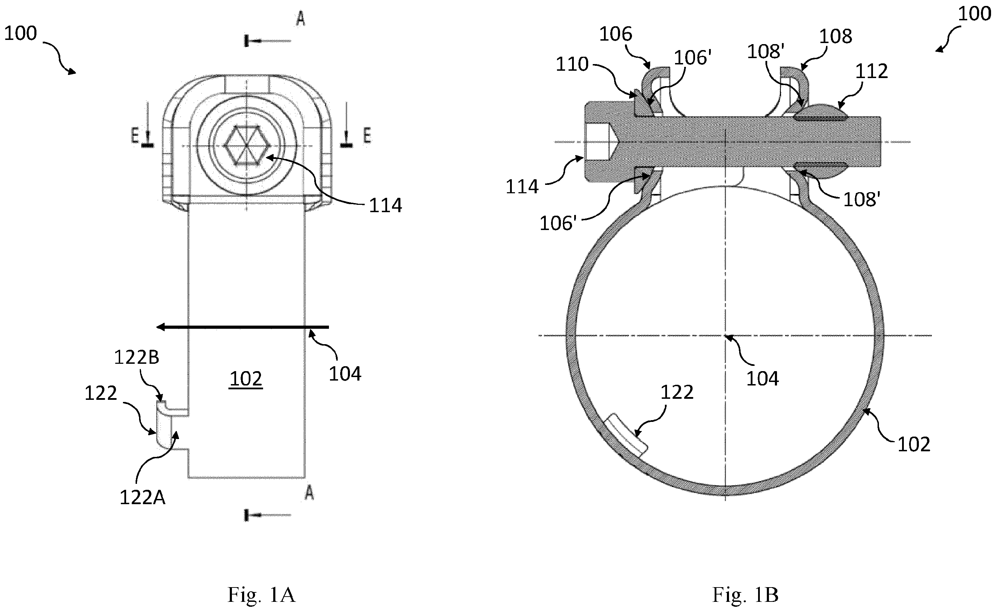

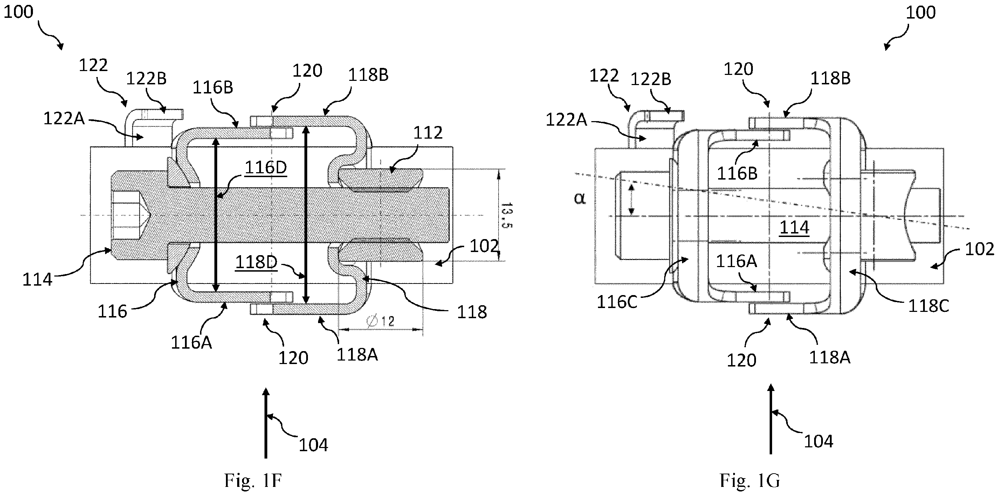

Figs. 1A-1G show a pipe clamp 100 according to certain embodiments described herein. It should be noted that the pipe clamp 100 shown Figs. 1A-1G does not represent a single embodiment, but rather a plurality of embodiments. In particular, it is explicitly emphasized that not each and every element/feature shown in Figs. 1A-1G is required/essential for every embodiment following from these Figures. Rather, only certain features and/or selected elements/components of Figs. 1A-1G can be used to form one or more embodiments, i.e. independent of the further features shown. In this case, those further features may not be relevant for the respective embodiment, but rather optional. For example, one group of features shown in Figs. 1A-1G can form a first embodiment and another group of features shown in Figs. 1A-1G can form a second embodiment, which is different from the first embodiment. The first embodiment and the second embodiment may also be combined to form yet another embodiment. Figs. 1A-1G may also show a third embodiment that may be independent of the others or combined with the first and/or the second embodiment and so on. Elements/components of Figs. 1A-1G which are not explicitly mentioned as belonging to a certain embodiment should be considered optional.

Figs. 1A-1G show a first embodiment of a pipe clamp 100 which comprises an annular structure 102 that may be configured to receive at least one pipe (not shown), e.g. in an axial direction 104 of the pipe. As can be seen in the sectional view of Fig. 1B, i.e. along direction A-A of Fig. 1A, the annular structure 102 may have a shape that substantially corresponds to the shape of the at least one pipe to be received, e.g., in this case, circular, ring and/or annular shaped. Thus, the annular structure 102 may be formed, for example, as a hollow shaft or as a band or band-like element, or a bent metal sheet/plate. The pipe (not shown) may be an exhaust pipe, e.g. of a vehicle such as car or motorcycle or the like.

As can be seen in Fig. 1B, the annular structure 102 may include a first flange element 106 arranged at one end of the annular structure 102 and a second flange element 108 arranged at another end of the annular structure 102. As shown in Fig. 1B, the flange elements 106, 108 may be integrally formed with the annular structure 102, e.g. in one piece. However, it is possible for the flange elements 106, 108 to be produced/manufactured separately therefrom and, e.g., to be attached to the annular structure 102, e.g. at a later stage. The flange elements 106, 108 may also include holes, e.g. bores, in order to receive a fastener 114, e.g. a bolt or screw or the like.

According to the first embodiment, the pipe clamp 100 may further comprise at least two individual alignment elements 110, 112 configured to be arranged on a fastener 114 to respectively engage with the first flange element 106 and the second flange element 108, e.g. in a form-fitting manner.

The first flange element 106 and the second flange element 108 may be arranged in between the at least two individual alignment elements 110, 112. The at least two individual alignment elements 110, 112 may respectively engage with the first flange element 106 and the second flange element 108 from opposing sides. For example, as can be seen in Fig. 1B, the at least two individual alignment elements 110, 112 may include a first alignment element 110 that may be arranged between, e.g. the head of the fastener 114 and the first flange element 106, e.g. to engage with the first flange element 106, for example on an outer surface thereof. The second alignment element 112 may be arranged, e.g. at an endpoint of the fastener 114, e.g. to engage with the second flange element 108, for example on an outer surface thereof. The individual alignment elements 110, 112 are made separately from the other components shown in the Figs. 1A-1E, i.e. not integrally made therewith.

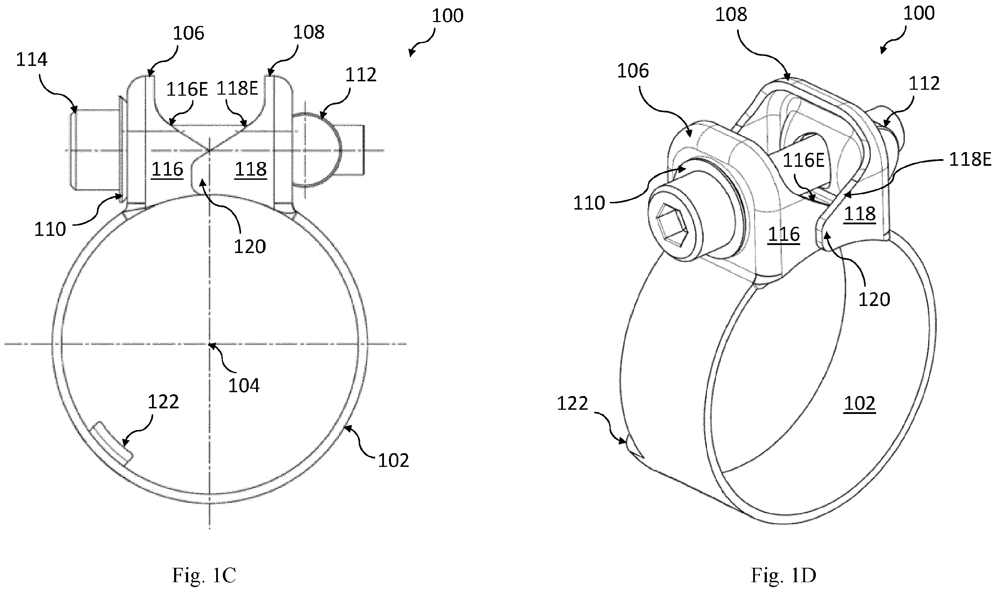

According to the first embodiment, one of the at least two individual alignment elements may have a flange-engaging shape that is substantially spherical. As can be seen by Fig. 1B (sectional view along line A-A) and Figs. 1 C-D, the washer 110 may be a spherical washer 100 and/or the washer may have a plan-convex-shape, e.g. that spherically curves (e.g. the flange-engaging shape) in the direction of the flange, e.g. the first flange element 106, on one side, while being, e.g. substantially flat (or planar) on the other, e.g. the opposing, side.

Having a flange-engaging shape that is substantially spherical allows for a larger contact area between the alignment element and the flange, ensuring a more even distribution of forces and reducing localized stress concentrations. Also, the curvature of the spherical shape aids in aligning the alignment element with the flange, promoting accurate positioning, orientation and/or preventing misalignment, unintended movements/angles, displacements, e.g. during installation or operation. The spherical engagement helps to enhance the stability and rigidity of the connection and reduces the likelihood of movement, vibration, and/or loosening. Also, a force, e.g. around the annular structure 102, may be more evenly distributed.

According to the first embodiment, the first flange element 106 and the second flange element 108 may each include a respective engaging portion 106', 108' to respectively receive the at least two individual alignment elements 110, 112, wherein each engaging portion 106', 108' may have a shape corresponding to a respective flange-engaging shape of the at least two individual alignment elements 110, 112. The engaging portions 106', 108' of the first flange element 106 and the second flange element 108 may be bent, in particular curved in a direction toward one another, e.g. concavely. For example, the engaging portion 106' may concavely curve, e.g. bent inwardly, in the direction towards the other one engaging portion 108'. At least one engaging portion 106', 108' may have a shape that is substantially spherical. Also, both of the engaging portions 106', 108' may have a shape that is substantially spherical.

The engaging portion 106', 108' that interfaces, contacts, is directed to and/or engages with the respective flange-engaging shape (e.g. of the respective alignment element 110, 112) is formed, adapted, and/or contoured to match, fit and/or conform to the shape or curvature of the respective alignment element. For example, as can be seen in Fig. 1B, the flange-engaging shape of the individual alignment element 110 is depicted as being convex or plan-convex, e.g. outwardly curved in the direction to the engaging portion 106' of the first flange element 106, e.g. substantially spherical, then the respective shape of the engaging portion 106' of the first flange element 106 may be also substantially spherical and concave, e.g. inwardly curved in the direction away from the flange-engaging shape, e.g. to engage or receive the flange-engaging shape of the alignment element 110. The same applies to the flange-engaging shape of the alignment element 112 and the engaging portion 108' of the second flange element 108.

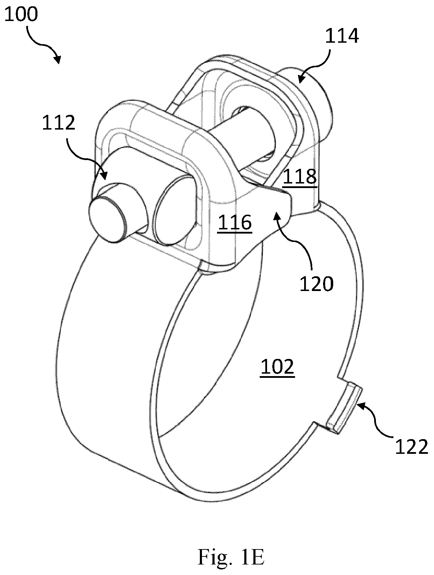

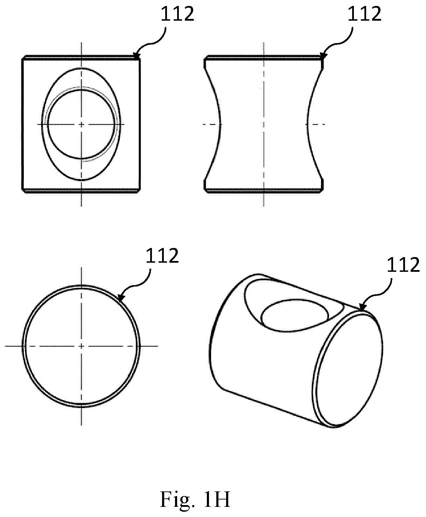

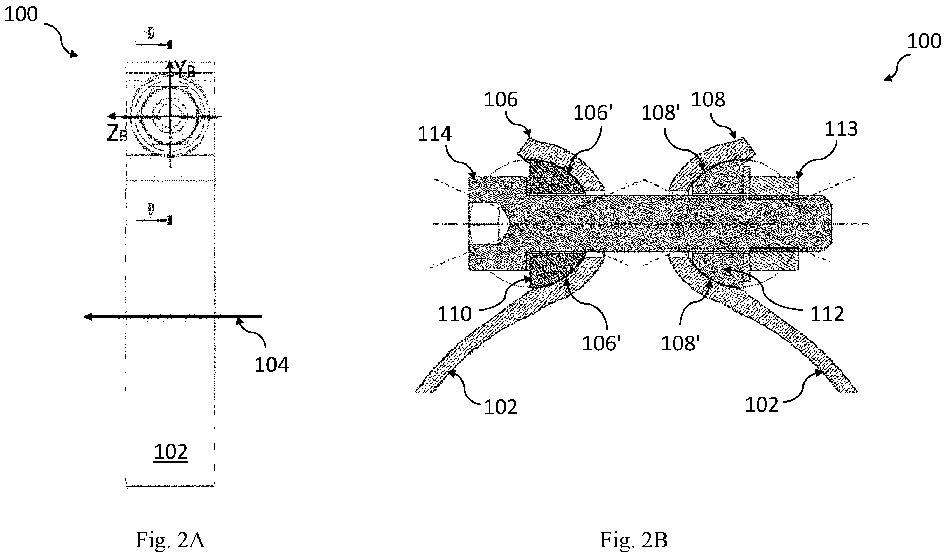

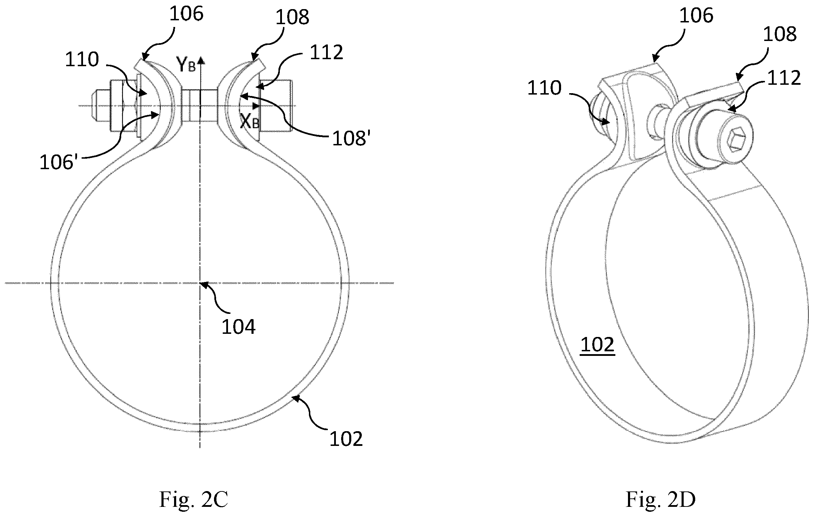

For example, as can be seen in Figs. 1B-D, the first individual alignment element 110 may be a spherical washer 110, e.g. having a flange-engaging shape that is substantially spherical and, as best seen in Fig. 1E, the second alignment element 112 may be a cylindrical nut 112, for example a cylinder-shaped or barrel-shaped nut, wherein the cylindrical nut 112 may have a flange-engaging shape that is substantially cylindrical. For the latter, the engaging portion 108' may have a shape that is substantially cylindrical, e.g. to receive a cylindrical or barrel nut 112. Other shapes of the nut 112 are also possible. For the cylindrical or barrel nut 112, the same may be threaded, wherein the threads may be perpendicular to the length of the nut 112. In particular, it could be a metric thread type nut, with a cylindrical outer shape (e.g. barrel shaped), which may be held in place (while tightening) as shown in the perspective views of Fig. 1H, e.g. with a counter cylindrical shape flange from the clamp, as can be seen, e.g. in Figs. 1D-1G. It should be noted that the dimensions of 12 mm and 13,5 mm as in Fig. 1F are merely an example, i.e. others are likewise conceivable. However, as will be explained in connection with Figs. 2A-2D below, the second alignment element 112 may also be another washer 112 having a flange-engaging shape that is substantially spherical, e.g. another spherical washer 112. In other words, the second alignment element 112 shown in Figs. 1A-1G is not limited to being a cylindrical nut. Instead, it could be another spherical washer or even a nut.

As further seen in the Figs. 1A-1G, each engaging portion 106', 108' has a shape corresponding to a respective flange-engaging shape of the at least two individual alignment elements 110, 112, e.g. the engaging portion 106' of the first flange element 106 may have a shape that is substantially spherical, e.g. to engage with the spherical washer 110 and/or the engaging portion 108' of the second flange element 108 may have a shape that is substantially cylindrical, e.g. to engage with the cylindrical nut 112.

The first flange element 106 and the second flange element 108 may include respective holes configured to receive the fastener 114, wherein a diameter of the holes is greater than a diameter of the fastener 114. This may result in having backlash, e.g. a clearance to allow the fastener to move more freely during fastening and, thus, lead to improved alignment/positioning and/or reduces friction, e.g. during fastening.

As shown in Figs. 1A-1G, the first flange element 106 and the second flange element 108 may be arranged in between the at least two individual alignment elements 110, 112. In particular the at least two individual alignment elements 110, 112 may respectively engage with the first flange element 106 and the second flange element 108 from opposing sides. This allows to prevent or reduce misalignment, unintended movements/angles, displacements and/or to reduce friction from both sides on the pipe clamp 100, and allows to maintain alignment, positioning and/or orientation, e.g. during fastening; especially due to the flange-engaging shape that is substantially spherical. When friction points are reduced, much lower torque is required in order to maintain a circumferential tightening force, e.g. between the clamp, annular structure and/or the pipe. This further allows to use smaller bolts making the pipe clamp lighter.

Figs. 1A-1G show a second embodiment of a pipe clamp 100 that may be combined with any other embodiment and/or aspect described herein, e.g. the above first embodiment or the following one or more embodiments.

The pipe clamp 100 according to the second embodiment, which may be combined with any aspect and/or embodiment recited herein, relates to a pipe clamp, comprising an annular structure 102 configured to receive at least one pipe (not shown). As can be seen, e.g. in Figs. 1A-1B, the annular structure 102 including a first flange element 106 arranged at one end of the annular structure 102 and a second flange element 108 arranged at another end of the annular structure 102. As shown in Figs. 1C-1G, the first flange element 106 and the second flange element 108 may include respective support structures extending towards each other and overlapping one another, in particular at least partially, e.g. at point, location or overlap 120. The support structures 116, 118 may be used to reduce and/or avoid unintentional movements, displacements and/or to counteract, e.g. lateral/radial, forces, e.g. acting on the pipe clamp. As shown in Figs. 1C-1E, the support structures 116, 118 may be integrally formed with the first flange element 106 and the second flange element 108 respectively and/or the annular structure 102, e.g. in one piece. For example, the first support structure 116 may be formed by the first flange element 106 and the second support structure 118 may be formed by the second flange element 108.

As shown in Figs. 1F-1G, each support structure 116, 118 may include at least two lateral sections 116A-B, 118A-B which may be connected, e.g. integrally or in one-piece, to a base section 116C, 118C. The at least two lateral sections 116A-B of the first flange element 106 extend in a direction towards the second flange element 108, e.g. towards the lateral sections 118A-B thereof. The at least two lateral sections 116A-B, 118A-B may be connected, e.g. integrally, substantially perpendicular with respect to the base section 116C, 118C. For example, the lateral sections 116A-B, 118A-B may project away from the base section 116C, 118C and/or the lateral sections 116A-B, 118A-B may form substantially a right angle or close to a right angle with respect to the base section 116C, 118C. The at least two lateral sections 116A-B, 118A-B may extend parallel to each other, e.g. maintaining an equal distance apart along their length, e.g. to create an opening 116D, 118D or receiving space 116D, 118D therebetween. For example, when view form a top as in Figs. 1F-1G, each support structure may be in the shape of a "U", e.g. substantially U-shaped, with the base section 116C, 118C forming the bottom line of the "U" and the lateral sections 116A-B, 118A-B forming the vertical lines of the "U".

As mentioned above, the lateral sections 116A-B, 118A-B of each support structure 116, 118 may be spaced apart, e.g. thereby defining an opening or a receiving space 116D, 118D, e.g. therebetween. A size of the opening 116D, 118D or receiving space 116D, 118D of one of the support structures 116, 118 may be greater than a size of the opening 116D, 118D or receiving space 116D, 118D of the other support structure 116, 118. For example, the support structure 118 may have lateral sections 118A-B that are further spaced apart as compared to the laterals sections 116A-B of the support structure 116, resulting in a larger opening 118D. However, it is also possible that the support structure 116 is formed to have the larger opening 116D. The opening 118D or receiving space 118D of the support structure 118 may, e.g. due to the greater size of the opening 118D, be configured to at least partially encompass, surround, encapsulate and/or enclose the other support structure 116, e.g. their lateral sections 116A, 116B, e.g. at point, location or overlap 120, in particular in a direction towards the support structure 116. As such, the lateral sections 118A-B, may extend beyond the lateral sections 116A-B, enclosing it within its bounds, e.g. its opening 118D defined therebetween. However, the overlap 120 may be smaller or larger, e.g. depending on how the pipe clamp 100 is fastened, e.g. at/on the pipe. Preferably, the lateral sections should be dimensioned at least such, that an, at least partial, overlap exists, e.g. once the pipe clamp is attached, fixed, fastened, installed, arranged, secured and/or positioned on the at least one pipe.

Additionally, as shown in more detail in Figs. 1C-1E, the at least two lateral sections 116A-B, 118A-B may be tapered and/or inclined, e.g. one support structure 116, 118 may be tapering and/or inclined in the direction towards the other support structure 116, 118, e.g. in directions 116E, 118E. The tapering/inclination allows for alignment and positioning of the flanges so that the bolt can be destressed from (other) not axial forces. Also due to the design of the flanges, there may be extra pressure from the flanges down to the pipe (e.g. on the radial section of the flange), so better sealing between clamp and pipe is provided. For example, the lateral sections 116A-B may decrease in width and/or height, e.g. they become smaller or narrower as they are approaching one another. For example, the lateral sections 116A-B, 118A-B may be in the shape of a triangle or a wedge, at least sectionally. This may allow to make components of the pipe clamp more easily accessible and/or allows to reduce material costs.

It should be noted that the second embodiment focusses on the flange elements 106, 108, more particularly the support structures 116, 118 formed thereby. Thus, the remaining elements/features shown in Figs. 1A-1G, e.g. the ones described in connection for the first embodiment and/or the others not explicitly mentioned, may be optional. However, the same may also be combined, e.g. with the first and/or the below embodiments, to form yet another embodiment.

Figs. 1A-1G show a third embodiment of a pipe clamp 100 that may be combined with any other embodiment and/or aspect described herein, e.g. the above first and/or second embodiment or the following one or more embodiments.

The pipe clamp 100 according to the third embodiment comprises an annular structure 102 configured to receive at least one pipe (not shown); wherein the annular structure 102 comprises at least one fixation structure 122 configured to engage with a protruding edge of the at least one pipe (not shown).

The at least one fixation structure 122 may be integrally formed with the annular structure 102, in particular at a circumferential portion of the annular structure 102. The at least one fixation structure 122 may include a straight section 122A extending in an axial direction 104 of the at least one pipe and a bent section 122B extending substantially perpendicular to the axial direction 104 of the at least one pipe, wherein in particular the fixation structure is substantially hook-shaped.

The fixation structure 122 provides/enhances stability and fixation of the pipe clamp 100, e.g. secures a position of the clamp 100 on one or more pipes and/or prevents movement and/or separation of the pipes, and/or allows for effective clamping and secure fastening, e.g. on the at least one pipe. For example, when two pipes are connected end to end, an, at least partial, overlap may be created, where one pipe encompasses, encloses and/or receives the other, which may result in a protruding edge, e.g. from an end of the outer pipe, e.g. that sticks out, projects, protrudes etc.

The fixation structure 122, e.g. due to its hook-shape, may engage with this protruding edge, e.g. to stabilize, maintain, strengthen, fix, secure and/or hold a position of the pipe clamp 100, e.g. on the at least one pipe. In this way, axial forces/movements, e.g. acting in an axial direction of the pipe on the pipe clamp, may be counteracted also.

It should be noted that the third embodiment focusses on the fixation structure 122 formed on the annular structure 102. Thus, the remaining elements/features shown in Figs. 1A-1G, e.g. the ones described in connection for the first and/or the second embodiment and/or the others not explicitly mentioned, may be optional. However, the same may also be combined with the third embodiment to form yet another embodiment.

Figs. 2A-2D show yet another embodiment of a pipe clamp 100. In particular, this embodiment may correspond to the first embodiment mentioned with respect to the above Figs. 1A-1G, e.g. when the first individual alignment element 110 may be a spherical washer 110, e.g. having a flange-engaging shape that is substantially spherical and the second alignment element 112 may also be another washer 112 having a flange-engaging shape that is substantially spherical, e.g. another spherical washer 112.

It should be noted that in the embodiment shown in Figs. 2A-2D the support structures 116, 118 formed by the flange elements 106, 108 and/or the fixation structure, e.g. formed on, at and/or by the annular structure 102, e.g. as in the second or third embodiment discussed above, are not shown. However, this is not to be understood that the same cannot be combined with the pipe clamp shown in Figs. 2A-2D. To the contrary, the features related to the embodiments discussed with respect to Figs. 1A-1G may each be combined with the embodiment shown in Figs. 2A-2D, e.g. individually or in combination, e.g. to form yet another embodiment.

Figs. 2A-2D show a pipe clamp 100 which comprises an annular structure 102 that may be configured to receive at least one pipe (not shown), e.g. in an axial direction 104 of the pipe. As can be seen in Figs. 2C-2D, the annular structure 102 may have a shape that substantially corresponds to the shape of the at least one pipe to be received, e.g., in this case, circular, ring and/or annular shaped. Thus, the annular structure 102 may be formed, for example, as a hollow shaft or as a band or band-like element or a bent metal sheet/plate. The pipe (not shown) may be an exhaust pipe, e.g. of a vehicle such as car or motorcycle or the like.

As can be seen in the sectional view of Fig. 2B, i.e. along direction D-D of Fig. 2A, the annular structure 102 may include a first flange element 106 arranged at one end of the annular structure 102 and a second flange element 108 arranged at another end of the annular structure 102. As shown in Fig. 2B, the flange elements 106, 108 may be integrally formed with the annular structure 102, e.g. in one piece. However, it is possible for the flange elements 106, 108 to be produced/manufactured separately therefrom and, e.g., to be attached to the annular structure 102. The flange elements 106, 108 may also include holes, e.g. bores, in order to receive a fastener 114, e.g. a bolt or screw or the like.

The pipe clamp 100 may further comprise at least two individual alignment elements 110, 112 configured to be arranged on a fastener 114 to respectively engage with the first flange element 106 and the second flange element 108, e.g. in a form-fitting manner.

The first flange element 106 and the second flange element 108 may be arranged in between the at least two individual alignment elements 110, 112. The at least two individual alignment elements 110, 112 may respectively engage with the first flange element 106 and the second flange element 108 from opposing sides. For example, as can be seen in Fig. 2B, the at least two individual alignment elements 110, 112 may include a first alignment element 110 that may be arranged between, e.g. the head of the fastener 114 and the first flange element 106, e.g. to engage with the first flange element 106, for example on an outer surface thereof. The second alignment element 112 may be arranged, e.g. at an endpoint of the fastener 114, e.g. to engage with the second flange element 108, for example on an outer surface thereof. The individual alignment elements 110, 112 are made separately from the other components shown in the Figs. 2A-2D, i.e. not integrally made therewith.

One of the at least two individual alignment elements may have a flange-engaging shape that is substantially spherical. As can be seen by Fig. 2B (sectional view along line D-D) and Figs. 2C-D, the washer 110 may be a spherical washer 100 and/or the washer may have a plan-convex-shape, e.g. that spherically curves (e.g. the flange-engaging shape) in the direction of the flange, e.g. the first flange element 106, on one side, while being, e.g. substantially flat (or planar) on the other, e.g. the opposing, side.

Having a flange-engaging shape that is substantially spherical allows for a larger contact area between the alignment element and the flange, ensuring a more even distribution of forces and reducing localized stress concentrations. Also, the curvature of the spherical shape aids in aligning the alignment element with the flange, promoting accurate positioning, orientation and/or preventing misalignment, unintended movements/angles, displacements, e.g. during installation or operation. The spherical engagement helps to enhance the stability and rigidity of the connection and reduces the likelihood of movement, vibration, and/or loosening.

According to the first embodiment, the first flange element 106 and the second flange element 108 may each include a respective engaging portion 106', 108' to respectively receive the at least two individual alignment elements 110, 112, wherein each engaging portion 106', 108' may have a shape corresponding to a respective flange-engaging shape of the at least two individual alignment elements 110, 112, e.g. substantially spherical. The engaging portions 106', 108' of the first flange element 106 and the second flange element 108 may be bent, in particular curved in a direction toward one another, e.g. concavely. For example, the engaging portion 106' may concavely curve, e.g. bent inwardly, in the direction towards the other one engaging portion 108'.

As can be seen in Figs. 2A-D, the first individual alignment element 110 may be a spherical washer 110, e.g. having a flange-engaging shape that is substantially spherical and the second alignment element 112 may also be a spherical washer 112 having a flange-engaging shape that is substantially spherical. A nut 113 may be provided, e.g. to transfer a force and, e.g. to fasten, fix, attach, secure and/or install the pipe clamp 100, e.g. on the at least one pipe.

The first flange element 106 and the second flange element 108 may include respective holes configured to receive the fastener 114, wherein a diameter of the holes is greater than a diameter of the fastener 114. This may result in having backlash, e.g. a clearance to allow the fastener to move more freely during fastening and, thus, lead to improved alignment/positioning and/or reduces friction, e.g. during fastening.

As shown in Figs. 2A-D, the first flange element 106 and the second flange element 108 may be arranged in between the at least two individual alignment elements 110, 112. In particular the at least two individual alignment elements 110, 112 may respectively engage with the first flange element 106 and the second flange element 108 from opposing sides. This allows to prevent or reduce misalignment, unintended movements/angles, displacements and/or to reduce friction from both sides on the pipe clamp 100, and allows to maintain alignment, positioning and/or orientation, e.g. during fastening; especially due to the flange-engaging shape that is substantially spherical. This may also help in distributing a force, e.g. a clamping force, e.g. around the annular structure and/or the pipe more evenly. For example, when friction points are reduced, much lower torque is required in order to maintain a circumferential tightening force, e.g. between the clamp, annular structure and/or the pipe. This further allows to use smaller bolts making the pipe clamp lighter.

While the foregoing is directed to embodiments of the disclosure, other and further embodiments of the disclosure may be devised without departing from the basic scope thereof, and the scope thereof is determined by the claims that follow.

## Claims

1. Pipe clamp (100), comprising:
an annular structure (102) configured to receive at least one pipe; the annular structure (102) including a first flange element (106) arranged at one end of the annular structure (102) and a second flange element (108) arranged at another end of the annular structure (102);
at least two individual alignment elements (110, 112) configured to be arranged on a fastener (114) to respectively engage with the first flange element (106) and the second flange element (108) in a form-fitting manner,
**characterized in that**
one of the at least two individual alignment elements (110, 112) has a flange-engaging shape that is substantially spherical.

2. Pipe clamp (100) according to claim 1, wherein the one of the at least two individual alignment elements (110, 112) is a washer (110), in particular a spherical washer (110).

3. Pipe clamp (100) according to any one of claims 1-2, wherein the first flange element (106) and the second flange element (108) are arranged in between the at least two individual alignment elements (110, 112), wherein in particular the at least two individual alignment elements respectively engage with the first flange element (106) and the second flange element (108) from opposing sides.

4. Pipe clamp (100) according to any one of claims 1-3, wherein the first flange element (106) and the second flange element (108) each include an engaging portion (106', 108') to respectively receive the at least two individual alignment elements (110, 112), wherein each engaging portion (106', 108') has a shape corresponding to a respective flange-engaging shape of the at least two individual alignment elements (110, 112).

5. Pipe clamp (100) according to claim 4, wherein the engaging portions (106', 108') of the first flange element (106) and the second flange element (108) are bent, in particular curved in a direction (116E, 118E) toward one another, wherein in particular at least one engaging portion (106', 108') has a shape that is substantially spherical.

6. Pipe clamp (100) according to any one of claims 1-5, wherein the first flange element (106) and the second flange element (108) include respective holes configured to receive the fastener (114), wherein a diameter of the holes is greater than a diameter of the fastener (114).

7. Pipe clamp (100) according to claim 5, wherein the holes of the first flange element (106) and the second flange element (108) are coaxially aligned with respective holes of the at least two individual alignment elements.

8. Pipe clamp (100) according to any one of claims 1-7, wherein the other one of the two alignment elements (110, 112) is another washer (112) having a flange-engaging shape that is substantially spherical, in particular another spherical washer (112).

9. Pipe clamp (100) according to any one of claims 1-8, wherein the other one of the two alignment elements (110, 112) is a nut (112, 113), in particular a barrel-shaped nut, wherein in particular the nut (112, 113) has a flange-engaging shape that is substantially cylindrical, wherein in particular the other one of the engaging portion (106', 108') has a shape that is substantially cylindrical.

10. Pipe clamp (100) according to any one of claims 1-9, wherein the pipe clamp (100) is an exhaust pipe clamp, in particular a self-adjusting exhaust pipe clamp, wherein in particular the first flange element (106) and the second flange element (108) are integrally formed with the annular structure (102).

11. Pipe clamp (100), according to any one of claims 1-10.
**characterized in that**
the first flange element (106) and the second flange element (108) include respective support structures (116, 118) extending towards each other and overlapping one another, in particular at least partially.

12. Pipe clamp (100) according to claim 11, wherein each support structure (116, 118) includes at least two lateral sections (116A, 116B, 118A, 118B) connected to a base section (116C, 118C), wherein the at least two lateral sections (116A, 116B, 118A, 118B) of one of the first flange element (106) or the second flange element (108) extend in a direction (116E, 118E) towards the other one of the first flange element (106) or the second flange element (108).

13. Pipe clamp (100) according to claim 12, wherein the at least two lateral sections (116A, 116B, 118A, 118B) of each support structure (116, 118) are arranged substantially perpendicular with respect to the base section (116C, 118C), wherein in particular the at least two lateral sections (116A, 116B, 118A, 118B) extend parallel to each other.

14. Pipe clamp (100) according to any one of claim 12-13, the lateral sections (116A, 116B, 118A, 118B) of each support structure (116, 118) are spaced apart thereby defining a receiving space (116D, 118D), wherein a size of the receiving space (116D, 118D) of one of the support structures (116, 118) is greater than a size of the receiving space (116D, 118D) of the other support structure (116, 118).

15. Pipe clamp (100) according to claim 14, wherein the receiving space (116D, 118D) of the support structure (116, 118) having the greater size is configured to at least partially encompass the other support structure (116, 118), in particular in a direction (116E, 118E) towards the other support structure (116, 118).

16. Pipe clamp (100) according to any one of claims 11-15, wherein the support structures (116, 118) are integrally formed with the first flange element (106) and the second flange element (108) respectively.

17. Pipe clamp (100), according to any one of claims 1-16.
**characterized in that** the annular structure (102) comprises at least one fixation structure (122) configured to engage with a protruding edge of the at least one pipe.

18. Pipe clamp (100) according to claim 17, wherein the at least one fixation structure (122) is integrally formed with the annular structure (102), in particular at a circumferential portion of the annular structure (102).

19. Pipe clamp (100) according to any one of claims 17-18, wherein the at least one fixation structure (122) includes a straight section (122A) extending in an axial direction (104) of the at least one pipe and a bent section (122B) extending substantially perpendicular to the axial direction (104) of the at least one pipe, wherein in particular the fixation structure (122) is substantially hook-shaped.

20. Pipe clamp assembly, comprising:
a pipe clamp (100) according to any one of claims 1-10; and/or
a pipe clamp (100) according to any one of claims 11-16; and/or
a pipe clamp (100) according to any one of claims 17-19, and
a fastener (114) mounted to the first flange element (106) and the second flange element (108).

21. Method for providing positional stabilization of one or more components comprised in:
a pipe clamp (100) according to any one of claims 1-10; and/or
a pipe clamp (100) according to any one of claims 11-16; and/or
a pipe clamp (100) according to any one of claims 17-19; or
a pipe clamp assembly according to claim 20,
during fastening of the same.

## Patentansprüche

1. Rohrschelle (100), umfassend:
eine ringförmige Struktur (102), die konfiguriert ist, um mindestens ein Rohr aufzunehmen; wobei die ringförmige Struktur (102) ein erstes Flanschelement (106), das an einem Ende der ringförmigen Struktur (102) angeordnet ist, und ein zweites Flanschelement (108), das an einem anderen Ende der ringförmigen Struktur (102) angeordnet ist, umfasst;
mindestens zwei individuelle Ausrichtungselemente (110, 112), die konfiguriert sind, um an einem Befestigungselement (114) angeordnet zu werden, um jeweils mit dem ersten Flanschelement (106) und dem zweiten Flanschelement (108) formschlüssig in Eingriff zu gelangen,
**dadurch gekennzeichnet, dass**
eines der mindestens zwei individuellen Ausrichtungselemente (110, 112) eine Flanscheingriffsform aufweist, die im Wesentlichen kugelförmig ist.

2. Rohrschelle (100) nach Anspruch 1, wobei das eine der mindestens zwei individuellen Ausrichtungselemente (110, 112) eine Unterlegscheibe (110), insbesondere eine kugelförmige Unterlegscheibe (110), ist.

3. Rohrschelle (100) nach einem der Ansprüche 1-2, wobei das erste Flanschelement (106) und das zweite Flanschelement (108) zwischen den mindestens zwei individuellen Ausrichtungselementen (110, 112) angeordnet sind, wobei insbesondere die mindestens zwei individuellen Ausrichtungselemente jeweils mit dem ersten Flanschelement (106) und dem zweiten Flanschelement (108) von gegenüberliegenden Seiten in Eingriff gelangen.

4. Rohrschelle (100) nach einem der Ansprüche 1-3, wobei das erste Flanschelement (106) und das zweite Flanschelement (108) jeweils einen Eingriffsabschnitt (106', 108') umfassen, um jeweils die mindestens zwei individuellen Ausrichtungselemente (110, 112) aufzunehmen, wobei jeder Eingriffsabschnitt (106', 108') eine Form aufweist, die einer jeweiligen Flanscheingriffsform der mindestens zwei individuellen Ausrichtungselemente (110, 112) entspricht.

5. Rohrschelle (100) nach Anspruch 4, wobei die Eingriffsabschnitte (106', 108') des ersten Flanschelements (106) und des zweiten Flanschelements (108) gebogen, insbesondere in einer Richtung (116E, 118E) aufeinander zu gekrümmt sind, wobei insbesondere mindestens ein Eingriffsabschnitt (106', 108') eine Form aufweist, die im Wesentlichen kugelförmig ist.

6. Rohrschelle (100) nach einem der Ansprüche 1-5, wobei das erste Flanschelement (106) und das zweite Flanschelement (108) jeweilige Löcher umfassen, die konfiguriert sind, um das Befestigungselement (114) aufzunehmen, wobei ein Durchmesser der Löcher größer als ein Durchmesser des Befestigungselements (114) ist.

7. Rohrschelle (100) nach Anspruch 5, wobei die Löcher des ersten Flanschelements (106) und des zweiten Flanschelements (108) koaxial mit jeweiligen Löchern der mindestens zwei individuellen Ausrichtungselemente ausgerichtet sind.

8. Rohrschelle (100) nach einem der Ansprüche 1-7, wobei das andere der zwei Ausrichtungselemente (110, 112) eine andere Unterlegscheibe (112) ist, die eine Flanscheingriffsform aufweist, die im Wesentlichen kugelförmig ist, insbesondere eine andere kugelförmige Unterlegscheibe (112).

9. Rohrschelle (100) nach einem der Ansprüche 1-8, wobei das andere der zwei Ausrichtungselemente (110, 112) eine Mutter (112, 113), insbesondere eine tonnenförmige Mutter, ist, wobei insbesondere die Mutter (112, 113) eine Flanscheingriffsform aufweist, die im Wesentlichen zylindrisch ist, wobei insbesondere der andere der Eingriffsabschnitte (106', 108') eine Form aufweist, die im Wesentlichen zylindrisch ist.

10. Rohrschelle (100) nach einem der Ansprüche 1-9, wobei die Rohrschelle (100) eine Abgasrohrschelle, insbesondere eine selbstjustierende Abgasrohrschelle, ist, wobei insbesondere das erste Flanschelement (106) und das zweite Flanschelement (108) einstückig mit der ringförmigen Struktur (102) ausgebildet sind.

11. Rohrschelle (100) nach einem der Ansprüche 1-10,
**dadurch gekennzeichnet, dass**
das erste Flanschelement (106) und das zweite Flanschelement (108) jeweilige Stützstrukturen (116, 118) umfassen, die sich zueinander hin erstrecken und einander überlappen, insbesondere mindestens teilweise.

12. Rohrschelle (100) nach Anspruch 11, wobei jede Stützstruktur (116, 118) mindestens zwei seitliche Abschnitte (116A, 116B, 118A, 118B) umfasst, die mit einem Basisabschnitt (116C, 118C) verbunden sind, wobei sich die mindestens zwei seitlichen Abschnitte (116A, 116B, 118A, 118B) von einem von dem ersten Flanschelement (106) oder dem zweiten Flanschelement (108) in einer Richtung (116E, 118E) zu dem anderen von dem ersten Flanschelement (106) oder dem zweiten Flanschelement (108) erstrecken.

13. Rohrschelle (100) nach Anspruch 12, wobei die mindestens zwei seitlichen Abschnitte (116A, 116B, 118A, 118B) jeder Stützstruktur (116, 118) im Wesentlichen senkrecht in Bezug auf den Basisabschnitt (116C, 118C) angeordnet sind, wobei sich insbesondere die mindestens zwei seitlichen Abschnitte (116A, 116B, 118A, 118B) parallel zueinander erstrecken.

14. Rohrschelle (100) nach einem der Ansprüche 12-13, wobei die seitlichen Abschnitte (116A, 116B, 118A, 118B) jeder Stützstruktur (116, 118) voneinander beabstandet sind, wodurch ein Aufnahmeraum (116D, 118D) definiert wird, wobei eine Größe des Aufnahmeraums (116D, 118D) von einer der Stützstrukturen (116, 118) größer als eine Größe des Aufnahmeraums (116D, 118D) der anderen Stützstruktur (116, 118) ist.

15. Rohrschelle (100) nach Anspruch 14, wobei der Aufnahmeraum (116D, 118D) der Stützstruktur (116, 118), der die größere Größe aufweist, konfiguriert ist, um die andere Stützstruktur (116, 118) mindestens teilweise zu umschließen, insbesondere in einer Richtung (116E, 118E) zu der anderen Stützstruktur (116, 118).

16. Rohrschelle (100) nach einem der Ansprüche 11-15, wobei die Stützstrukturen (116, 118) jeweils einstückig mit dem ersten Flanschelement (106) und dem zweiten Flanschelement (108) ausgebildet sind.

17. Rohrschelle (100) nach einem der Ansprüche 1-16,
**dadurch gekennzeichnet, dass** die ringförmige Struktur (102) mindestens eine Befestigungsstruktur (122) umfasst, die konfiguriert ist, um mit einer vorstehenden Kante des mindestens einen Rohrs in Eingriff zu kommen.

18. Rohrschelle (100) nach Anspruch 17, wobei die mindestens eine Befestigungsstruktur (122) einstückig mit der ringförmigen Struktur (102), insbesondere an einem Umfangsabschnitt der ringförmigen Struktur (102), ausgebildet ist.

19. Rohrschelle (100) nach einem der Ansprüche 17-18, wobei die mindestens eine Befestigungsstruktur (122) einen geraden Abschnitt (122A), der sich in einer axialen Richtung (104) des mindestens einen Rohrs erstreckt, und einen gebogenen Abschnitt (122B), der sich im Wesentlichen senkrecht zu der axialen Richtung (104) des mindestens einen Rohrs erstreckt, umfasst, wobei insbesondere die Befestigungsstruktur (122) im Wesentlichen hakenförmig ist.

20. Rohrschellenanordnung, umfassend:
eine Rohrschelle (100) nach einem der Ansprüche 1-10; und/oder
eine Rohrschelle (100) nach einem der Ansprüche 11-16; und/oder
eine Rohrschelle (100) nach einem der Ansprüche 17-19, und
ein Befestigungselement (114), das an dem ersten Flanschelement (106) und dem zweiten Flanschelement (108) montiert ist.

21. Verfahren zum Bereitstellen einer Positionsstabilisierung einer oder mehrerer Komponenten, die enthalten sind in:
eine Rohrschelle (100) nach einem der Ansprüche 1-10; und/oder
eine Rohrschelle (100) nach einem der Ansprüche 11-16; und/oder
eine Rohrschelle (100) nach einem der Ansprüche 17-19; oder
eine Rohrschellenanordnung nach Anspruch 20,
während des Befestigens derselben.

## Revendications

1. Collier de serrage pour tuyau (100), comprenant :
une structure annulaire (102) configurée pour recevoir au moins un tuyau ; la structure annulaire (102) incluant un premier élément de bride (106) agencé à une extrémité de la structure annulaire (102) et un deuxième élément de bride (108) agencé à une autre extrémité de la structure annulaire (102) ;
au moins deux éléments d'alignement individuels (110, 112) configurés pour être agencés sur un élément de serrage (114) afin de s'engager respectivement avec le premier élément de bride (106) et le deuxième élément de bride (108) par ajustement de forme,
**caractérisé en ce que**
l'un desdits au moins deux éléments d'alignement individuels (110, 112) présente une forme d'engagement de bride qui est substantiellement sphérique.

2. Collier de serrage pour tuyau (100) selon la revendication 1, dans lequel ledit un desdits au moins deux éléments d'alignement individuels (110, 112) est une rondelle (110), en particulier une rondelle sphérique (110).

3. Collier de serrage pour tuyau (100) selon l'une quelconque des revendications 1 à 2, dans lequel le premier élément de bride (106) et le deuxième élément de bride (108) sont agencés entre lesdits au moins deux éléments d'alignement individuels (110, 112), dans lequel en particulier lesdits au moins deux éléments d'alignement individuels s'engagent respectivement avec le premier élément de bride (106) et le deuxième élément de bride (108) à partir de côtés opposés.

4. Collier de serrage pour tuyau (100) selon l'une quelconque des revendications 1 à 3, dans lequel le premier élément de bride (106) et le deuxième élément de bride (108) incluent chacun une portion d'engagement (106', 108') pour recevoir respectivement lesdits au moins deux éléments d'alignement individuels (110, 112), dans lequel chaque portion d'engagement (106', 108') présente une forme correspondant à une forme d'engagement de bride respective desdits au moins deux éléments d'alignement individuels (110, 112).

5. Collier de serrage pour tuyau (100) selon la revendication 4, dans lequel les portions d'engagement (106', 108') du premier élément de bride (106) et du deuxième élément de bride (108) sont pliées, en particulier incurvées dans la direction (116E, 118E) allant de l'une vers l'autre, dans lequel en particulier au moins une portion d'engagement (106', 108') présente une forme substantiellement sphérique.

6. Collier de serrage pour tuyau (100) selon l'une quelconque des revendications 1 à 5, dans lequel le premier élément de bride (106) et le deuxième élément de bride (108) incluent des trous respectifs configurés pour recevoir l'élément de serrage (114), dans lequel le diamètre des trous est supérieur au diamètre de l'élément de serrage (114).

7. Collier de serrage pour tuyau (100) selon la revendication 5, dans lequel les trous du premier élément de bride (106) et du deuxième élément de bride (108) sont alignés coaxialement avec les trous respectifs desdits au moins deux éléments d'alignement individuels.

8. Collier de serrage pour tuyau (100) selon l'une quelconque des revendications 1 à 7, dans lequel l'autre desdits deux éléments d'alignement (110, 112) est une autre rondelle (112) ayant une forme d'engagement de bride qui est substantiellement sphérique, en particulier une autre rondelle sphérique (112).

9. Collier de serrage pour tuyau (100) selon l'une quelconque des revendications 1 à 8, dans lequel l'autre desdits deux éléments d'alignement (110, 112) est un écrou (112, 113), en particulier un écrou en forme de barillet, dans lequel en particulier l'écrou (112, 113) présente une forme d'engagement de bride qui est substantiellement cylindrique, dans lequel en particulier l'autre portion d'engagement (106', 108') présente une forme substantiellement cylindrique.

10. Collier de serrage pour tuyau (100) selon l'une quelconque des revendications 1 à 9, dans lequel le collier de serrage pour tuyau (100) est un collier de serrage pour tuyau d'échappement, en particulier un collier de serrage pour tuyau d'échappement autoajustable, dans lequel en particulier le premier élément de bride (106) et le deuxième élément de bride (108) sont formés intégralement avec la structure annulaire (102).

11. Collier de serrage pour tuyau (100) selon l'une quelconque des revendications 1 à 10,
**caractérisé en ce que**
le premier élément de bride (106) et le deuxième élément de bride (108) incluent des structures de support (116, 118) respectives qui s'étendent l'une vers l'autre et se chevauchent, en particulier au moins partiellement.

12. Collier de serrage pour tuyau (100) selon la revendication 11, dans lequel chaque structure de support (116, 118) inclut au moins deux sections latérales (116A, 116B, 118A, 118B) connectées à une section de base (116C, 118C), dans lequel lesdites au moins deux sections latérales (116A, 116B, 118A, 118B) d'un élément parmi le premier élément de bride (106) et le deuxième élément de bride (108) s'étendent dans une direction (116E, 118E) allant vers l'autre élément parmi le premier élément de bride (106) et le deuxième élément de bride (108).

13. Collier de serrage pour tuyau (100) selon la revendication 12, dans lequel lesdites au moins deux sections latérales (116A, 116B, 118A, 118B) de chaque structure de support (116, 118) sont agencées substantiellement perpendiculairement par rapport à la section de base (116C, 118C), dans lequel en particulier lesdites au moins deux sections latérales (116A, 116B, 118A, 118B) s'étendent parallèlement l'une à l'autre.

14. Collier de serrage pour tuyau (100) selon l'une quelconque des revendications 12 à 13, dans lequel les sections latérales (116A, 116B, 118A, 118B) de chaque structure de support (116, 118) sont espacées, définissant ainsi un espace de réception (116D, 118D), dans lequel la taille de l'espace de réception (116D, 118D) de l'une des structures de support (116, 118) est supérieure à la taille de l'espace de réception (116D, 118D) de l'autre structure de support (116, 118).

15. Collier de serrage pour tuyau (100) selon la revendication 14, dans lequel l'espace de réception (116D, 118D) de la structure de support (116, 118) ayant la plus grande taille est configuré pour inclure au moins partiellement l'autre structure de support (116, 118), en particulier dans une direction (116E, 118E) dirigée vers l'autre structure de support (116, 118) .

16. Collier de serrage pour tuyau (100) selon l'une quelconque des revendications 11 à 15, dans lequel les structures de support (116, 118) sont formées intégralement avec le premier élément de bride (106) et le deuxième élément de bride (108), respectivement.

17. Collier de serrage pour tuyau (100) selon l'une quelconque des revendications 1 à 16,
**caractérisé en ce que** la structure annulaire (102) comprend au moins une structure de fixation (122) configurée pour s'engager avec un bord saillant dudit au moins un tuyau.

18. Collier de serrage pour tuyau (100) selon la revendication 17, dans lequel ladite au moins une structure de fixation (122) est formée intégralement avec la structure annulaire (102), en particulier sur une portion circonférentielle de la structure annulaire (102).

19. Collier de serrage pour tuyau (100) selon l'une quelconque des revendications 17 à 18, dans lequel ladite au moins une structure de fixation (122) inclut une section droite (122A) qui s'étend en direction axiale (104) dudit au moins un tuyau et une section pliée (122B) qui s'étend substantiellement perpendiculairement à la direction axiale (104) dudit au moins un tuyau, dans lequel en particulier la structure de fixation (122) présente substantiellement une forme de crochet.

20. Ensemble de collier de serrage pour tuyau, comprenant :
un collier de serrage pour tuyau (100) selon l'une quelconque des revendications 1 à 10 ; et/ou
un collier de serrage pour tuyau (100) selon l'une quelconque des revendications 11 à 16 ; et/ou
un collier de serrage pour tuyau (100) selon l'une quelconque des revendications 17 à 19, et
un élément de serrage (114) monté sur le premier élément de bride (106) et le deuxième élément de bride (108).

21. Procédé permettant de stabiliser la position d'un ou plusieurs composants consistant en :
un collier de serrage pour tuyau (100) selon l'une quelconque des revendications 1 à 10 ; et/ou
un collier de serrage pour tuyau (100) selon l'une quelconque des revendications 11 à 16 ; et/ou
un collier de serrage pour tuyau (100) selon l'une quelconque des revendications 17 à 19 ; ou
un ensemble de collier de serrage pour tuyau selon la revendication 20,
lors de leur serrage.
